# DEMANDE DE BREVET EUROPEEN

(11) **EP 0 540 440 A1**
(43) Date de publication de la demande: **05.05.1993**
(21) Numéro de dépôt: 92440121.9
(22) Date de dépôt: 30.10.1992
(51) Int. Cl.: A47J 31/56, A47J 31/46

(54) **Poste d'injection perfectionné pour machine à café comprenant une régulation de la température de l'eau chaude près du point d'injection**

(30) Priorité: 30.10.1991 FR 9113601; 11.06.1992 FR 9207235
(71) Demandeur: RENEKA INDUSTRIES, F-67870 Griesheim près Molsheim (FR)
(72) Inventeur: Farrugia, Jean-Paul, F-67310 Scharrachbergheim (FR); Zanin, Yvano, Duppigheim, F-67120 Molsheim (FR)
(74) Mandataire: Metz, Paul

(57) **Abrégé**

Le poste d'injection pour machine à café comprend un organe mélangeur (14) ou (35) à régulation thermostatique séparé, apposé, intégré ou incorporé au bloc mécanique de chaque groupe d'injection (27) ou en contact avec celui-ci, dont la sortie est située près du point d'injection de l'eau chaude dans le café, de façon à réaliser un mélange à proximité du point d'injection en vue d'obtenir une température idéale et constante de l'eau chaude délivrée.

## Description

La présente invention se rapporte à un poste d'injection perfectionné pour une machine à café. Ce poste permet de maintenir automatiquement l'eau à sa température idéale au point d'injection dans le café, quelles que soient les conditions d'utilisation.

Elle se rapporte plus particulièrement à la présence d'un organe mélangeur-régulateur placé près du groupe d'injection et ainsi, concerne un poste d'injection perfectionné comprenant un organe de mélange intégré ou rapporté au corps du groupe d'injection pour une machine à café.

Actuellement, les circuits de distribution de l'eau chaude dans les machines à café ne permettent pas une régulation satisfaisante de la température de l'eau pour la rendre constante et idéale au niveau de la sortie, indépendamment des conditions d'utilisation.

Ces circuits sont en effet conçus de la manière suivante.

L'eau arrive sous pression par un premier conduit dans une cartouche de chauffage d'un certain volume intérieur et en repart par un deuxième conduit pour être délivrée chaude dans un des ensembles de préparation du café connus sous la terminologie "poste d'injection". Chaque poste comporte un groupe d'injection constitué par l'ensemble mécanique des pièces servant à cette fonction.

Un conduit métallique de distribution généralement en cuivre relie chaque cartouche au groupe d'injection correspondant, situé au niveau de la face avant de la machine où les postes d'injection sont alignés au-dessus d'un plateau porte-tasses.

Le chauffage de l'eau s'effectue selon le principe du bain-marie. La cartouche est immergée dans l'eau chaude d'une chaudière contenant un plus grand volume d'eau maintenue sous pression à une température constante proche de l'ébullition.

Par ailleurs, pour éviter le refroidissement de l'eau entre la chaudière et les postes d'injection, on réalise massives et conductrices de chaleur toutes les pièces de jonction et de support assurant la liaison mécanique et hydraulique entre la chaudière et chaque groupe d'injection, ainsi que ce dernier.

Les pièces constitutives formant les groupes d'injection et se développant directement autour de ceux-ci et les conduits réalisés en métal (cuivre, inox ...) constituent des masses de grande conductivité thermique.

Le volume supplémentaire à l'intérieur duquel passe l'eau chaude se trouve par construction en contact thermique direct avec le corps de la chaudière. Tout ce volume est donc porté rapidement et reste à une température voisine de celle du corps de la chaudière. La structure métallique massive de la liaison offre une certaine inertie thermique qui assure le maintien de la température de l'eau depuis la chaudière jusqu'à sa sortie au niveau de chaque groupe d'injection, même dans des conditions de faible débit intermittent.

Cependant, au cours de l'utilisation de la machine, l'obtention et le maintien, au niveau des sorties injectées, d'une température constante et idéale permettant de réaliser un bon café, sont rendus très difficiles.

En effet, les premiers volumes d'eau chaude délivrés prélevés à partir de la chaudière subissent une baisse de température sensible provenant de la transmission des calories au circuit de distribution et au bloc métallique du groupe d'injection pour leur mise en température. La température des premiers cafés préparés s'avère insuffisante.

Il ne servirait à rien d'élever la température de l'eau au départ de la chaudière, car ce régime transitoire lié aux premiers cafés conduirait par la suite, en régime permanent, à une température excessive.

Au contraire, suite à une consommation intensive ou répétée, comme on peut le rencontrer en période de pointe dans les brasseries, cafés, restaurants et autres débits de boissons, les circuits et les groupes d'injection montent à une température élevée voisine de celle de l'eau chaude délivrée.

En effet, l'eau chaude transmet ses calories aux pièces massives de la liaison chaudière-groupe d'injection. Sa température de départ de la chaudière étant réglée pour un régime intermittent avec pertes calorifiques sur le trajet de la chaudière au groupe d'injection correspondant, l'eau chaude ne subit alors entre la cartouche et la sortie injectée qu'une faible déperdition thermique et se trouve en sortie à une température excessive.

Les cafés préparés successivement deviennent rapidement systématiquement brûlants. Le passage de l'eau trop chaude empêchant en outre les arômes contenus dans la mouture de se développer suffisamment s'ajoute au désagrément d'un café servi brûlant.

Certains constructeurs ont remédié à cet inconvénient par l'isolation thermique des pièces massives de liaison entre la chaudière et chaque groupe d'injection, ou en réalisant ces pièces creuses pour faire circuler l'eau chaude de la chaudière à l'intérieur de celles-ci.

Malheureusement ces modifications, aussi bien l'une que l'autre, n'apportent qu'une faible amélioration.

Toutes ces techniques antérieures présentent l'inconvénient important de délivrer, à un certain moment dans le régime de haute cadence d'utilisation, de l'eau, soit trop, soit pas assez chaude au niveau des postes d'injection.

Ainsi, les modes connus de transfert de l'eau chaude ne garantissent pas, sur la totalité des conditions et impératifs d'utilisation, la fourniture d'un café de qualité.

La présente invention a pour but de diminuer, de limiter et de réguler la température de l'eau fournie aux groupes d'injection du café en vue d'obtenir, au niveau de la préparation, une eau à température idéale et constante totalement indépendante des conditions d'utilisation.

A cet effet, l'invention consiste en l'interposition, dans une machine de préparation de café liquide comprenant un ou plusieurs circuits de préparation de l'eau, d'un organe mélangeur-régulateur d'eau froide sur chaque circuit placé sur le conduit amenant l'eau chaude de la cartouche au poste d'injection, et ceci le plus près possible du point d'injection dans le café.

L'invention consiste également à incorporer dans le groupe ou à rapporter sur une des faces de celui-ci le corps d'un organe mélangeur-régulateur.

Cet organe mélangeur-régulateur d'eau froide comprend une voie principale d'eau chaude et une entrée d'eau froide pour son mélange en quantité variable régulée avec l'eau chaude, de façon à délivrer en sortie une eau à une température constante et idéale pour la préparation du café, inférieure à celle de l'eau chaude à la sortie de la cartouche.

L'organe mélangeur-régulateur est placé de préférence à proximité du poste d'injection.

Selon une variante préférée, l'organe mélangeur-régulateur est un mitigeur thermostatique avec limiteur de température.

Selon une autre variante, le corps de l'organe mélangeur-régulateur est totalement intégré au groupe d'injection ou au bloc mécanique le reliant à la chaudière.

La présente invention permet ainsi de résoudre globalement l'ensemble des inconvénients précités, grâce au poste d'injection perfectionné comportant une régulation de la température de l'eau à proximité du point d'injection à l'aide de l'organe mélangeur-régulateur séparé rapporté ou intégré au corps du groupe d'injection.

Les avantages que procure l'invention sont multiples :
. température idéale de l'eau pour la préparation du café par lixiviation ;
. température constante et indépendante des conditions d'utilisation ;
. organe simple et facile à monter dans le circuit ou sur ou dans le corps du groupe d'injection ;
. coût supplémentaire acceptable ;
. pas d'énergie supplémentaire consommée ;
. peu d'entretien.

Par ailleurs, d'autres avantages spécifiques découlent de la variante à organe mélangeur-régulateur intégré ou rapporté.

L'avantage principal provient de l'intégration du mélangeur dans un bloc mécanique métallique important assurant une inertie thermique suffisante pour un bon fonctionnement de la capsule thermostatique.

Ainsi d'une part, la capsule thermostatique est plongée dans un milieu de température quasi stable, d'autre part, la température du bloc mécanique constituant le corps du mélangeur reste à la température des masses métalliques du groupe d'injection et se trouve ainsi fortement corrélée avec la température de sortie d'eau chaude injectée dans le café.

Egalement, la disposition, non pas intermédiaire dans le circuit, mais à l'extrémité du circuit, juste avant la sortie de l'eau injectée dans le café, permet une précision de régulation de la température de l'eau à la température idéale du mélange.

Par ailleurs, on rajoute de l'eau froide ne passant pas par la chaudière, c'est-à-dire une eau non dénaturée provenant directement du réseau.

De plus, le temps de réponse s'avère faible car le clapet est déjà ouvert au repos et la mobilité est telle que le clapet commence déjà à se fermer dès le premier instant du prélèvement.

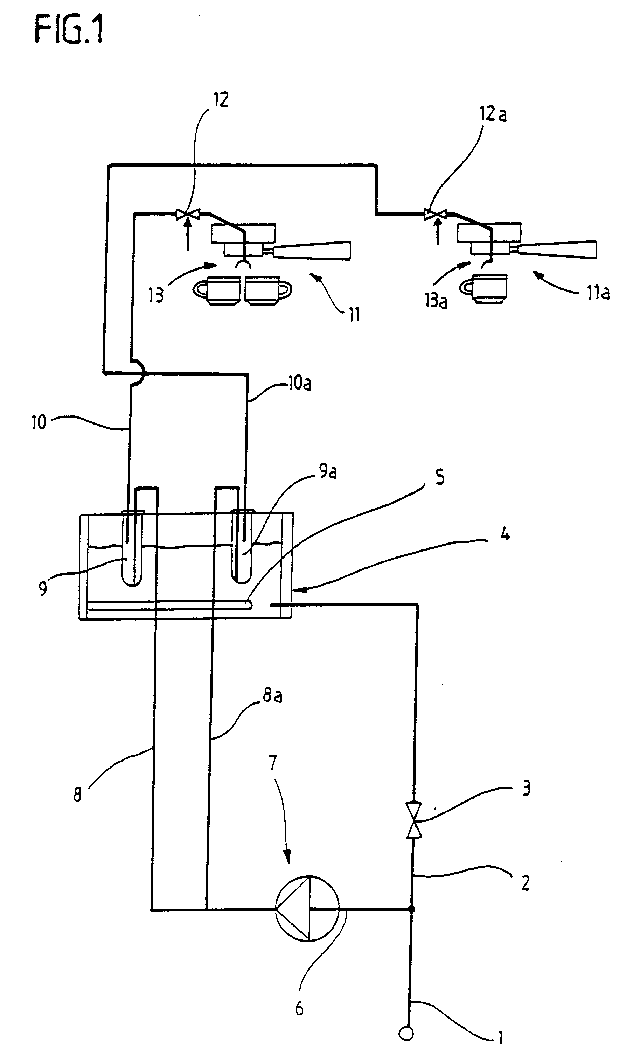

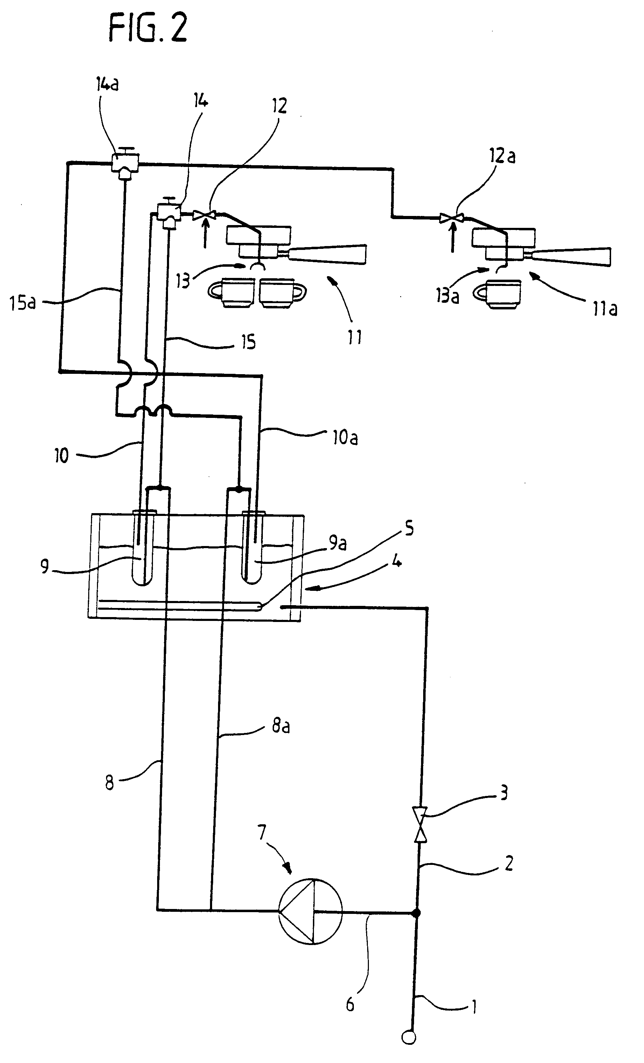

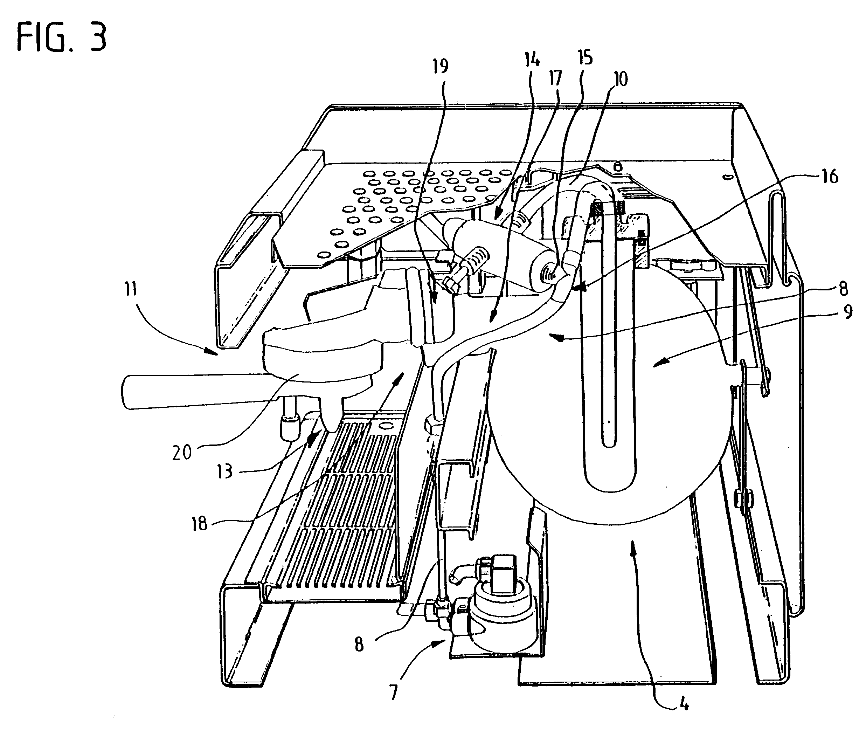

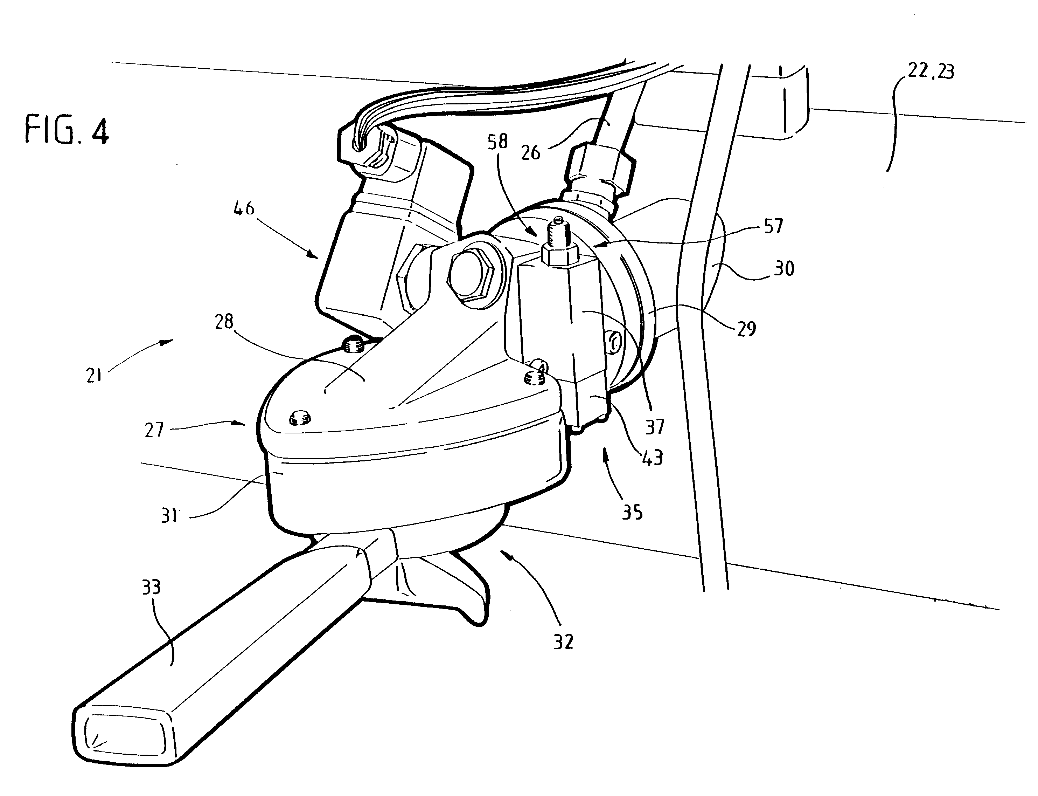

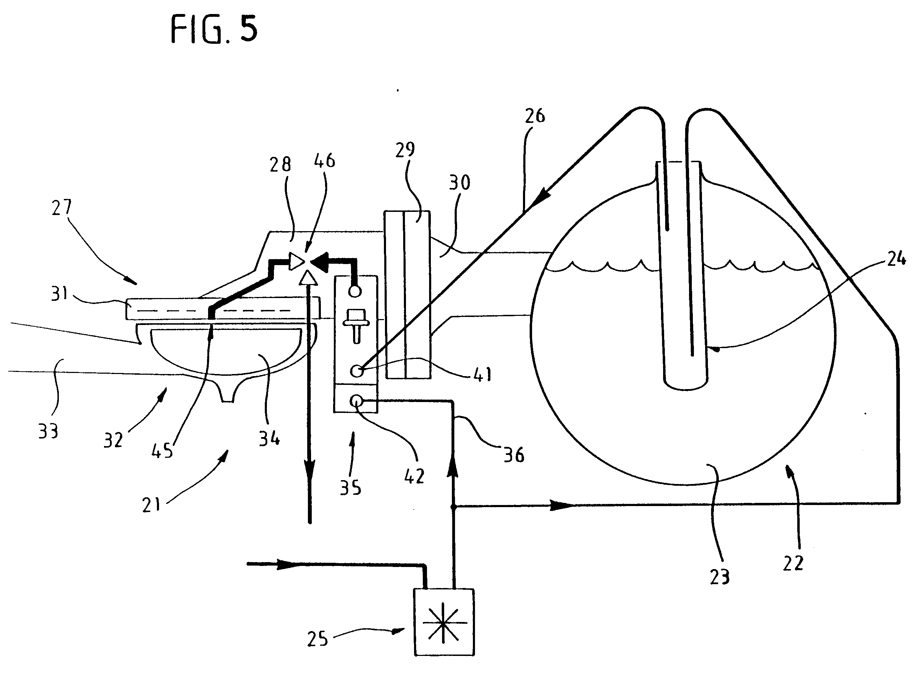

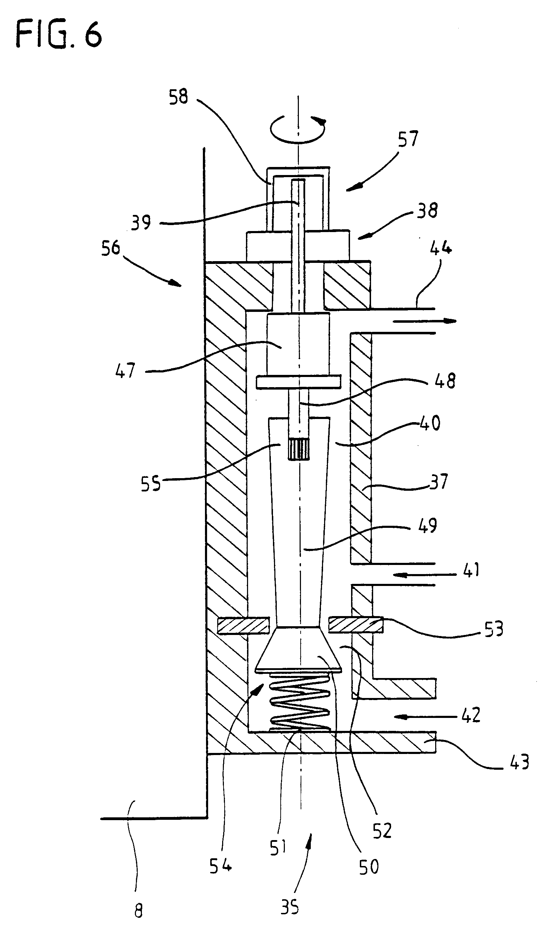

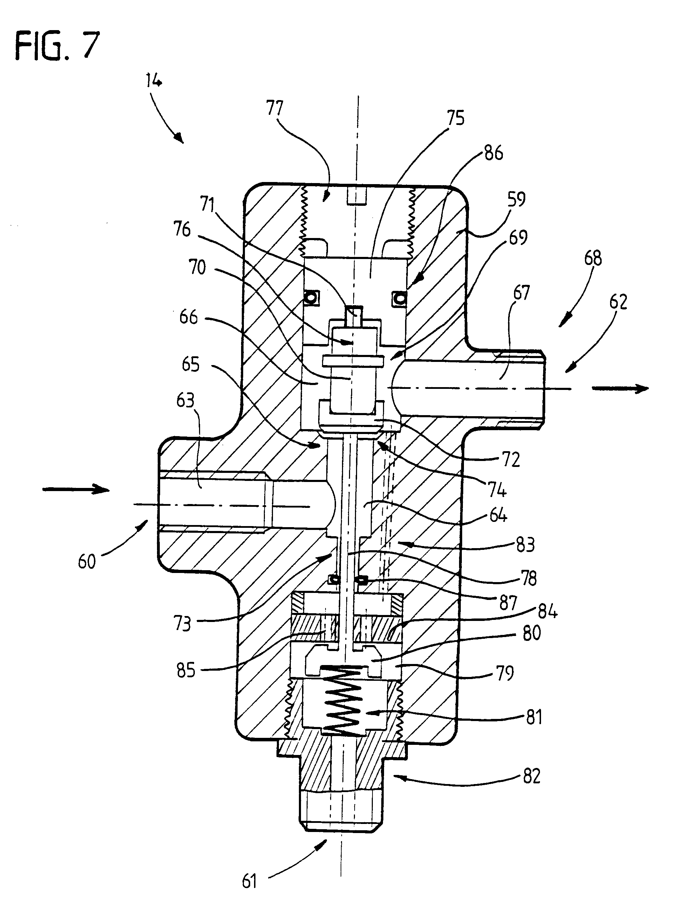

On comprendra mieux l'invention dans ses variantes et son fonctionnement à la lecture de la description ci-après en référence aux figures illustratives dans lesquelles :
. la figure 1 est le schéma général des circuits d'eau d'une machine à café classique comportant deux circuits de préparation de l'eau pour le café ;
. la figure 2 est le schéma général des circuits d'eau, chaque circuit de préparation de l'eau étant pourvu d'un organe mélangeur situé près du corps du groupe d'injection ;
. la figure 3 est une vue en perspective de la chaudière et de son environnement, montrant un exemple d'emplacement de l'organe mélangeur sur le circuit de préparation de l'eau chaude ;
. la figure 4 est une vue générale en perspective d'un groupe d'injection d'une machine à café comportant, selon l'invention, un mélangeur-régulateur intégré situé à proximité de l'injection ;
. la figure 5 est le schéma hydraulique d'un groupe d'injection à mélangeur-régulateur fixé en applique ;
. la figure 6 est une vue schématique en coupe longitudinale d'un exemple de réalisation d'un organe mélangeur-régulateur à intégrer dans le groupe ou à rapporter sur celui-ci pour de faibles débits ;
. la figure 7 est une vue schématique en coupe longitudinale d'une version d'un organe mélangeur-régulateur pour débits plus importants.

Le schéma général de préparation d'eau chaude d'une machine classique à café à deux postes d'injection est représenté schématiquement sur la figure 1. Il présente deux circuits de préparation de l'eau chaude pour le café. Pour simplifier le dessin, les organes de contrôle et de régulation de la pression au niveau des cartouches, de la température et de la pression au niveau de la chaudière, ont été volontairement omis.

Une arrivée d'eau 1 provenant du réseau se divise en :
. un conduit d'alimentation 2 contrôlé par une vanne 3 qui dessert une chaudière 4 équipée d'une résistance électrique de chauffage 5 ;
. un conduit 6, relié à une pompe 7, qui se partage en deux conduits identiques tels que 8,8a alimentant chacun une cartouche telle que 9,9a immergée dans la chaudière 4.

La sortie de chaque cartouche 9 ou 9a est reliée par un conduit 10 ou 10a à un poste 11 ou 11a d'injection du café et contrôlée par une vanne de distribution 12 ou 12a.

Les postes 11,11a sont à simple bec ou multi-becs.

Dans une machine à café de type classique telle que celle décrite ci-dessus, l'eau du réseau présente à l'arrivée d'eau 1 alimente, d'une part, la chaudière 4 par le conduit 2 sur lequel la vanne 3 permet de maintenir un niveau constant, et d'autre part, par le conduit 6, la pompe 7, puis les conduits 8,8a et les cartouches 9,9a immergées dans la chaudière 4.

L'eau est maintenue à l'intérieur de la chaudière à une température proche de l'ébullition.

L'eau sous pression à l'intérieur de chaque cartouche 9,9a acquiert une température élevée. Lorsque l'on agit sur l'une des vannes de distribution 12 ou 12a, l'eau provenant de la cartouche 9 ou 9a correspondante est apportée par le tube 10 ou 10a, et sort sous pression par un bec 13 ou 13a du poste d'injection 11 ou 11a.

L'invention, dans la réalisation préférée telle que celle représentée schématiquement de manière non limitative sur la figure 2, comprend, pour chaque circuit de préparation de l'eau, un organe mélangeur-régulateur 14,14a par exemple à effet thermostatique ou réglable automatiquement par un circuit de commande à partir d'une température de consigne. Cet organe mélangeur est monté par exemple sur le conduit 10 ou 10a de façon que sa sortie soit située mécaniquement et hydrauliquement à proximité de l'entrée du poste d'injection 11, 11a.

Son entrée d'eau chaude est reliée à la cartouche 9,9a et sa sortie d'eau mitigée à l'entrée du poste d'injection 11,11a.

Son entrée froide est reliée à l'alimentation en eau froide par un conduit 15,15a monté par exemple en dérivation sur l'un ou l'autre conduit 8 ou 8a.

La figure 3 représente en perspective l'intérieur d'une machine à café. On y remarque la chaudière 4, une cartouche de chauffage 9, le conduit 8 d'amenée d'eau froide à la cartouche 9, le conduit 10 de départ de la cartouche vers le poste d'injection et l'organe mélangeur-régulateur 14 inséré dans le circuit de l'eau chaude entre la chaudière et le poste d'injection 11 à proximité de l'entrée de celui-ci.

Cet organe mélangeur est relié par son entrée froide au moyen d'un raccord 16 en T au conduit 8 d'amenée d'eau froide. Le conduit 15 est alors constitué par la branche de dérivation du raccord 16.

On remarque sur cette figure une liaison massive mécanique monobloc 17 entre la chaudière 4 et le corps du groupe d'injection dans lequel vient se raccorder le conduit d'amenée d'eau chaude au groupe d'injection formé d'un bloc mécanique 18 représentant une masse métallique compacte présentant une partie arrière d'interface 19 prolongée vers l'avant par un support 20 porte-coupe.

La figure 3 représente un exemple d'emplacement du mélangeur-régulateur 14 sur une machine à café, une des caractéristiques principales de l'invention étant de le placer à proximité de l'entrée de chaque poste d'injection 11. Situé en position supérieure, il se montre en même temps facile d'accès pour toute intervention de réglage et de réparation.

Pour des raisons de fabrication et de compacité, mais surtout d'échange thermique, il s'avère intéressant d'intégrer le corps de l'organe mélangeur 14 à la masse métallique arrière d'interface 19 de chaque poste d'injection 11 ou de la rapporter sur une des faces mécaniques du groupe d'injection.

Selon les variantes décrites ci-après, on intègre à la fabrication par moulage ou usinage ou on incorpore par montage à chacun des groupes d'injection d'eau chaude, ou encore on rapporte contre le corps de chacun des groupes d'injection d'une machine à café un organe de mélange d'eau froide et de régulation, par exemple thermostatique, à sortie disposée à proximité du point d'injection d'eau dans le café, ou à l'entrée du groupe d'injection en vue d'une régulation optimale de la température de l'eau chaude injectée dans le café.

Une machine à café équipée selon ces variantes présentant au moins un poste d'injection 21 tel que représenté sur les figures 4 et 5 comprend essentiellement une chaudière 22 à ballon 23 d'eau chaude maintenue à température constante sous pression, contenant autant de cartouches 24 que de postes d'injection 21. Ces cartouches font office d'échangeur pour la mise à température convenable de l'eau provenant du réseau à travers un compteur d'eau 25. Chaque cartouche 24 est reliée en sortie par un conduit de distribution 26 à un groupe d'injection 27.

Les groupes d'injection sont disposés en une rangée sur la face avant de la machine, au-dessus du plateau porte-tasses, comportant classiquement une grille-support et une évacuation pour les excédents de café ou en cas de débordement ou renversement.

Chaque groupe d'injection 27 est constitué d'un bloc mécanique métallique 28 relié mécaniquement au ballon 23 de la chaudière 22 par une fixation à bride 29 montée sur un tronc cylindrique 30 de raccordement. Sur ce bloc mécanique est fixé un porte-coupe 31 sur lequel vient se monter à blocage un support 32 de coupe et son manche 33 maintenant un godet-passoire 34 contenant la mouture de café puis le marc.

Ce bloc mécanique 28 est conçu de façon à intégrer à la fabrication ou à incorporer un organe de mélange et de régulation 35, par usinage ou par fixation latérale, par exemple en applique sur une face plane du corps du groupe d'injection.

Selon une des variantes, l'organe de mélange et de régulation 35 et le bloc 28 du groupe d'injection ne forment qu'une seule et même pièce mécanique.

Le groupe d'injection 27 et l'organe de mélange et de régulation 35 pourront être conformés dans un bloc mécanique unique, ou bien être solidarisés, par exemple par vis, de façon à former une unité mécanique et thermique unique avec une surface de contact et de liaison importante, par exemple sa grande face appliquée sur la face plane d'une paroi du corps du groupe d'injection afin d'assurer un bon contact thermique.

Il est prévu pour chaque groupe d'injection perfectionné qui, selon l'invention, présente un organe de mélange et de régulation intégré ou incorporé 35, un conduit d'alimentation d'eau froide tel que 36 qui relie directement le compteur d'eau 25 à l'organe mélangeur.

On décrira tout d'abord ci-après un organe de mélange et de régulation 35 intégré, incorporé ou solidaire du groupe d'injection, prévu pour les faibles débits.

Cet organe, représenté sur la figure 6, se compose d'un corps sous la forme d'un bloc mécanique parallélépipédique creux 37 fermé en partie supérieure par une pièce d'obturation 38 traversée par une tige de réglage 39. La cavité intérieure du bloc mécanique forme une chambre de mélange 40.

Il est prévu sur le bloc mécanique une entrée latérale d'eau chaude 41, une admission inférieure d'eau froide 42 par une embase 43 et une sortie latérale supérieure d'eau chaude régulée 44 reliée directement à la sortie injectée 45 dans le porte-coupe 31 par l'intermédiaire d'une vanne de décompression 46 (figures 4 et 5).

La chambre de mélange 40 renferme une capsule thermostatique 47 à tige de poussée 48 reliée à un piston de régulation 49 mobile le long de la chambre de mélange 40 dont la tête est évasée et conformée en pièce mobile 50 de clapet travaillant sous l'effet de poussée de la capsule 47 et en rappel par un ressort 51 en ouverture/fermeture au-delà et contre un siège 52 en forme d'épaulement garni d'un joint d'étanchéité 53 situé dans la partie basse de la chambre de mélange 40 et constituant ensemble un clapet 54 commandant l'entrée d'eau froide par le bas dans la chambre de mélange 40.

L'entrée inférieure d'eau froide 42 est située sous le clapet 54 alors que l'entrée d'eau chaude 41 se trouve légèrement au-dessus de celui-ci de façon que l'eau chaude entre directement dans la chambre de mélange 40 et que l'on régule en commandant le débit d'eau froide.

Le piston de régulation 49 comporte à son autre extrémité un évidement 55 permettant l'introduction de la tige de poussée 48 de la capsule thermostatique. Cette capsule se dilate ou se contracte en fonction de la température régnant dans la chambre de mélange. La tige de poussée est ainsi animée de mouvements longitudinaux qui, se communiquant au piston 49, provoquent l'ouverture plus ou moins grande du clapet d'admission d'eau froide puis sa fermeture ou inversement.

La tête de la capsule thermostatique 47 est liée mécaniquement à un dispositif de réglage 56 qui permet de déplacer la capsule jusqu'à la position de référence pour une température de régulation donnée ou température de consigne.

Il sert à déplacer le point de consigne, c'est à dire la température de régulation autour de laquelle oscille avec de faibles écarts la température régulée de l'eau en sortie.

Ce dispositif de réglage 56 se compose par exemple d'un raccord 57 solidarisé par vissage à l'extrémité du bloc mécanique 37 de l'organe de mélange et de régulation 35. Ce raccord est traversé longitudinalement par la tige de réglage 39 dont l'extrémité située vers l'extérieur porte par exemple un bouton de manoeuvre 58 sous la forme du raccord 57.

L'organe de mélange et de régulation 35 fonctionne en commande d'admission d'eau froide disposée à proximité de l'entrée d'eau chaude dans la chambre de mélange 40. Cette caractéristique permet d'obtenir les meilleurs résultats en rapidité et en finesse de régulation.

Le bloc mécanique 18 ou 28 de l'organe mélangeur est, soit conformé d'une seule pièce avec le groupe d'injection, soit appliqué contre puis solidarisé à une surface plane réceptrice.

La capsule thermostatique utilisée peut fonctionner selon différents moyens de dilatation. En raison de la gamme très étroite des températures d'utilisation, la capsule à dilatation de cire s'avère adaptée.

On décrira maintenant en référence à la figure 7, un exemple d'organe mélangeur-régulateur adapté à des débits plus importants.

Il est formé par un bloc fonctionnel hydraulique qui se compose des principaux éléments suivants intérieurs à un corps 59 de robinetterie présentant une entrée latérale d'eau chaude 60, une entrée d'eau froide 61 et une sortie d'eau mitigée 62.

L'entrée latérale d'eau chaude 60 communique avec un conduit transversal 63 débouchant dans une chambre longitudinale d'entrée 64.

Cette chambre d'entrée 64 s'ouvre par un orifice 65 sur une chambre de mélange 66 à conduit latéral de sortie 67 terminé par une saillie filetée 68 constituant la sortie 62 du mélangeur.

La chambre de mélange 66 est occupée par un élément thermosensible 69, par exemple une capsule thermostatique 70 à téton de dilatation 71.

La capsule thermostatique 70 est montée et maintenue droite sur une embase 72 constituant la tête d'un piston d'admission 73 destiné à régler le débit d'admission d'eau froide. A cet effet, la face inférieure de l'embase 72 est conformée en clapet 74 et les bords de l'orifice 65 de la chambre de mélange 66 affectent la forme du siège de clapet correspondant.

Ce piston d'admission 73 est monté en rappel élastique de poussée de la capsule thermostatique 70 contre une pièce coulissante de fermeture 75 dans la cavité centrale inférieure de laquelle l'extrémité supérieure 76 de la capsule 70 et le téton de dilatation 71 sont maintenus.

La position de la pièce coulissante de fermeture 75 est commandée par une vis de réglage 77 logée dans la tête de l'organe mélangeur-régulateur 14 ou 35.

Le piston d'admission 73 constitue l'ensemble mobile de l'organe mélangeur-régulateur. Il comporte une tige 78 traversant longitudinalement la chambre d'entrée 64 pour se terminer dans une chambre d'admission 79 d'eau froide par une extrémité inférieure 80 conformée en coupelle recevant la base d'un ressort de rappel 81 dont l'extrémité opposée appuie contre la face interne en regard de la cavité centrale d'un raccord d'extrémité 82 monté sur l'extrémité inférieure de l'organe mélangeur-régulateur. Ce raccord d'extrémité 82 traversé par un conduit coaxial constitue l'entrée d'eau froide 61.

La chambre d'admission 79 d'eau froide communique avec la chambre de mélange 66 par un passage intérieur longitudinal 83 représenté en pointillé. Cette chambre d'admission 79 est séparée par une paroi transversale 84 servant de séparation, de pièce de butée et de siège de clapet pour l'extrémité inférieure 80 du piston conformée en coupelle.

A cet effet, la paroi transversale 84 comporte des passages tels que 85 obturables par le dos de l'extrémité inférieure 80 du piston en vue de son admission sélective dans la chambre de mélange 66 formant ainsi un clapet d'admission d'eau froide.

Ces passages peuvent être obturés par le dos de la coupelle.

Une étanchéité 86 est prévue entre le corps de l'organe mélangeur-limiteur et la pièce coulissante par un joint par exemple torique.

Une autre étanchéité 87 existe entre la tige du piston et le corps de l'organe mélangeur-limiteur par un joint de tige.

Lors du réglage initial, on tourne la vis de réglage 77 à la position souhaitée, ce qui a pour effet de placer la pièce coulissante de fermeture 75 à un endroit précis correspondant à la température de consigne choisie.

Le téton de dilatation 71 atteindra plus ou moins vite cette pièce qui lui sert de butée selon qu'elle se trouve plus ou moins proche de la capsule thermostatique 70.

Ainsi, le clapet d'admission d'eau froide se fermera plus ou moins vite en fonction de ce réglage.

Le mouvement du piston d'admission dans et le long du corps de l'organe mélangeur s'effectue rapidement. Il provient de l'effet moteur de la capsule thermostatique 70 et de la force de rappel imprimée par le ressort de rappel 81. Plus la température de l'eau est élevée dans la chambre de mélange, plus le clapet d'admission d'eau froide doit s'ouvrir.

La capsule étant sous l'effet de la pression axiale engendrée par le ressort de rappel 81, la dilatation supplémentaire provoquée par le surcroît de température par rapport à la température de consigne ouvrira le clapet d'admission d'eau froide, tout en fermant partiellement le clapet d'admission de l'eau chaude en vue d'en diminuer le débit, et inversement, fermera le clapet d'admission d'eau froide dans le cas d'une diminution de température.

Comme déjà indiqué, la description de l'organe mélangeur-régulateur thermostatique 14 ou 35 ci-dessus ne constitue qu'un exemple. En effet, tout organe produisant les mêmes effets convient parfaitement. Un organe mélangeur simple, convenablement piloté, convient également.

Le fonctionnement dans la machine à café de chaque circuit de préparation de l'eau est ainsi modifié.

Le mélangeur limiteur-régulateur 14 ou 35 est réglé à une température de consigne par action sur la vis de réglage, de manière à ce que le mélange d'eau arrive au niveau de la sortie du poste d'injection à la température voulue, idéale pour la préparation du café quelles que soient les conditions d'utilisation.

Chaque fois que l'on actionne la vanne de distribution pour obtenir la délivrance d'eau chaude injectée dans la masse comprimée du café moulu par un bec, une quantité variable d'eau froide est mélangée dans la chambre de mélange de l'organe mélangeur 14 ou 35 à l'eau chaude en provenance de la cartouche. L'eau ainsi préparée et apportée au poste de préparation se trouve et reste maintenue par la régulation thermostatique à une température idéale constante, inférieure à celle de l'eau délivrée par la cartouche.

Cette température est réglable par action manuelle, ou commandée ou télécommandée sur' le mélangeur. Elle garantit une température idéale pour chaque usage et son maintien.

Bien entendu, d'autres variantes ou adaptations simples de l'organe mélangeur et du circuit de régulation de température entrent dans le cadre de l'invention et au delà des moyens décrits, diverses modifications évidentes et variantes simples entrent dans le cadre de la présente invention.

## Revendications

1. Poste d'injection pour machine à café comprenant une chaudière (4), un ou plusieurs postes d'injection (11) ou (21) et une liaison mécanique métallique entre la chaudière et chaque poste d'injection, et pour chaque poste d'injection un circuit d'injection d'eau chaude dans le café à travers un groupe d'injection, caractérisé par l'interposition sur le trajet de l'eau chaude alimentant chaque groupe d'injection, près du point d'injection, d'un organe mélangeur-régulateur (14) ou (35) dont l'entrée d'admission d'eau froide est reliée au circuit d'eau froide alimentant la machine en vue de maintenir une température idéale constante indépendante des conditions d'utilisation.

2. Poste d'injection selon la revendication 1 caractérisé en ce que la sortie de l'organe de mélange et de régulation (14) ou (35) est située à proximité du point d'injection.

3. Poste d'injection selon les revendications 1 ou 2 caractérisé en ce que la sortie de l'organe de mélange et de régulation (14) ou (35) débouche dans l'entrée du groupe d'injection.

4. Poste d'injection pour machine à café selon la revendication 3 caractérisé en ce que le corps de l'organe de mélange et de régulation (14) ou (35) est en contact mécanique et thermique direct avec la masse métallique du bloc mécanique du groupe d'injection, et en ce que le mélange s'effectue à proximité du point d'injection (45) de l'eau chaude dans le café.

5. Circuit selon l'une quelconque des revendications précédentes, caractérisé en ce que l'organe mélangeur (14) ou (35) est un limiteur-régulateur thermostatique.

6. Circuit selon la revendication 3, caractérisé en ce que l'organe mélangeur (14) ou (35) est intégré mécaniquement dans chaque liaison mécanique existant entre la chaudière et chaque poste d'injection ou dans le bloc mécanique (18) ou (28) du groupe d'injection.

7. Poste selon la revendication 6, caractérisé en ce que le bloc mécanique du groupe d'injection et l'organe de mélange et de régulation (14) ou (35) sont formés d'une seule pièce.

8. Poste selon la revendication 3, caractérisé en ce que le bloc mécanique (18) ou (28) du groupe d'injection et l'organe de mélange et de régulation (14) ou (35) sont solidarisés entre eux.

9. Poste selon la revendication 1, caractérisé en ce que l'organe de mélange et de régulation (14) ou (35) est monté dans le circuit d'alimentation du groupe d'injection à proximité de l'entrée du groupe d'injection.

10. Poste selon l'une quelconque des revendications précédentes, caractérisé en ce que l'organe de mélange et de régulation (14) ou (35) présente un corps métallique sous la forme d'un bloc mécanique (37) creux délimitant une chambre de mélange (40) renfermant une capsule thermostatique (47) à tige de poussée (48) actionnant un piston de régulation (49) terminé par un évasement (50) constituant avec un siège prévu en partie basse un clapet d'admission de l'eau froide commandant l'admission de l'eau froide, ladite capsule étant ajustée en position de référence par un dispositif de réglage monté sur la partie supérieure du bloc (37).

11. Poste selon la revendication 12, caractérisé en ce que l'admission d'eau froide se situe sous le clapet de l'organe de mélange à l'extérieur de la chambre de mélange (40), en ce que l'entrée d'eau chaude débouche directement dans la chambre de mélange (40) de l'organe de mélange et se trouve au-dessus du clapet de régulation, et en ce que la sortie d'eau est située en partie supérieure de la chambre de mélange à l'opposé du clapet.

12. Poste selon l'une quelconque des revendications de 1 à 9, caractérisé en ce que :
. l'organe de mélange et de régulation présentant dans un corps (59) de robinetterie une entrée latérale d'eau chaude (60), une entrée d'eau froide (61) et une sortie d'eau mitigée (62) se compose d'une chambre longitudinale d'entrée (64) prolongée par une chambre de mélange (66) occupée par une capsule thermostatique (70) et comportant une sortie d'eau mélangée avec laquelle elle communique par un orifice (65), la chambre d'entrée présentant une entrée latérale d'eau chaude et une entrée longitudinale d'eau froide,
. et en ce que le passage entre les chambres est obturé par un clapet commandé par la dilatation de la capsule thermostatique et prolongé par un piston d'admission (73) traversant longitudinalement la chambre d'entrée pour actionner en ouverture ou en fermeture l'entrée longitudinale d'eau froide.

13. Poste selon l'une quelconque des revendications précédentes, caractérisé en ce que l'on régule en modulant l'admission d'eau froide.
